(19) Europäisches Patentamt
European Patent Office
Office européen des brevets

(11) **EP 3 391 981 A1**

(12) **EUROPÄISCHE PATENTANMELDUNG**

(43) Veröffentlichungstag:
**24.10.2018   Patentblatt 2018/43**

(51) Int Cl.:
*B22F 3/105* (2006.01)
*B23K 26/00* (2014.01)
*B23K 26/34* (2014.01)
*C23C 24/10* (2006.01)
*B29C 64/153* (2017.01)
*B23K 26/08* (2014.01)
*C23C 24/08* (2006.01)

(21) Anmeldenummer: **17166877.5**

(22) Anmeldetag: **18.04.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Heraeus Additive Manufacturing GmbH
63450 Hanau (DE)**

(72) Erfinder: **Hubert, Peter
63579 Freigericht (DE)**

(74) Vertreter: **Heraeus IP
Heraeus Holding GmbH
Schutzrechte
Heraeusstraße 12-14
63450 Hanau (DE)**

(54) **KONTINUIERLICHE BESCHICHTUNG VON METALLBÄNDERN DURCH ADDITIVE FERTIGUNG**

(57)   Die Vorliegende Erfindung betrifft ein Verfahren zum Aufbringen einer Materialschicht auf ein Metallband, enthaltend die Schritte: Bereitstellen eines Metallbands, Bereitstellen eines schmelz- und/oder sinterbaren Pulvers, Erzeugen einer Schicht des schmelz- und/oder sinterbaren Pulvers auf einem Abschnitt des sich bewegenden Metallbands unter Erhalt eines Pulverbetts und Erhitzen von zumindest einem Teil des Pulverbetts mit Laser- oder Elektronenstrahlung auf wenigstens die Sinter- oder Schmelztemperatur des Pulvers unter Erzeugung einer Materialschicht. Weiterhin betrifft die Erfindung eine Anlage zur Durchführung des erfindungsgemäßen Verfahrens.

Figur 1

**Beschreibung**

Ausgangsmaterial für die Fertigung von Kontakten, Leadframes, Sensoren oder LEDs sind meist gewalzte Metallbänder. Diese Bänder werden typischer Weise galvanisch beschichtet und anschließend gestanzt. Das Galvanisieren erfolgt durch teilweises oder vollständiges Eintauchen des Metallbands in ein Galvanikbad unter Anlegen einer Spannung, die dazu ausreicht Bestandteiles des Galvanikbads elektrochemisch abzuscheiden. Verfahrensbedingt können bei Durchlauf-Bandgalvanisierungsanlagen nur Streifen entlang der Zugrichtung des Bandes beschichtet werden. Beschichtungen, die senkrecht zur Bandrichtung variierende Geometrien aufweisen oder einzelne Bereiche, die nicht mit benachbarten Bereichen verbunden sind, sind nicht oder nur sehr aufwendig herstellbar. Dazu muss das Band rundum mit Fotolack beschichtet, getrocknet und die gewünschte Kontur freigelegt werden. Anschließend kann der freigelegte Bereich galvanisch beschichtet werden. Restlicher Lack muss nach erfolgter Galvanisierung aufwändig entfernt werden.

Eine Möglichkeit, besonders einfach Materialschichten auf Oberflächen aufzubringen, liefern additive Fertigungsverfahren, wie z.B. selektives Laserschmelzen (SLM). Bisher werden additive Fertigungsverfahren typischer Weise eingesetzt, um durch schichtweises Auftragen und Verschmelzen von Pulvern dreidimensionale Bauteile herzustellen. Solche Verfahren sind zum Beispiel aus der DE102010040261A1 bekannt. Um ein Bauteil zu fertigen, wird aus einem Pulvervorrat eine dünne Pulverschicht auf eine Bauplatte aufgetragen, z.B. mit einer Rakel. Anschließend wird mit energiereicher Strahlung, z.B. mit Laserstrahlung, selektiv ein Teil der Pulverschicht verschmolzen. Dann wird die Bauplatte abgesenkt und es wird eine weitere Pulverschicht mit einer Rakel auf der vorherigen Schicht aufgetragen. Analog zur vorherigen Schicht wird auch die weitere Pulverschicht selektiv aufgeschmolzen, so dass sie sich mit der vorherigen Schicht verbinden kann. Dieses Verfahren wird so oft wiederholt, bis aus der Summe aller einzeln aufgetragenen Schichten das fertige Bauteil entstanden ist. Mit diesen Verfahren ist es nicht möglich, Substrate wie zum Beispiel Bänder fortlaufend zu beschichten, da mit einer Rakel nicht kontinuierlich Pulver auf das Substrat aufgetragen werden kann, während gleichzeitig selektiv aufgeschmolzen wird.

Aus der US20160129528A1 ist ein Verfahren bekannt, bei dem eine dünne Metallfolie fortlaufend mittels Laserstrahlung mit den Oberflächen von zu beschichtenden Bauteilen verschmolzen wird und so die Bauteiloberfläche beschichtet werden. Dieser Prozess kann kontinuierlich ablaufen. Das Verfahren hat mehrere Nachteile. Zum einen fällt nicht mit dem Bauteil verschmolzene Folie als Abfall an und kann nicht weiter verwendet werden. Zum anderen ist es mit dem Verfahren nicht möglich, die Schichtdicke der aufgebrachten Schicht variabel einzustellen, da hierfür jeweils eine Folie mit einer anderen Schichtdicke dem Prozess zugeführt werden muss. Des Weiteren ist dieses Verfahren auf Materialien beschränkt, die als Folien bereitgestellt werden können.

Eine Aufgabe der vorliegenden Erfindung ist es, die genannten Nachteile zu überwinden und ein vereinfachtes Verfahren bereitzustellen, bei dem Materialschichten, insbesondere Metallschichten, auf Metallbändern aufgetragen werden können. Insbesondere sollte das Verfahren es ermöglichen, kontinuierlich Schichten mit Geometrien auf Metallbänder aufzutragen, die senkrecht zur Bandrichtung variieren oder vereinzelte Bereiche aufweisen.

Des Weiteren sollte das Verfahren möglichst materialeffizient sein, um Abfallprodukte zu minimieren oder zu vermeiden.

Die Aufgabe wird gelöst durch ein Verfahren zum Aufbringen einer Materialschicht auf ein Metallband, enthaltend die Schritte:

a) Bereitstellen eines Metallbands,

b) Bereitstellen eines schmelz- und/oder sinterbaren Pulvers,

c) Erzeugen einer Schicht des schmelz- und/oder sinterbaren Pulvers auf einem Abschnitt des sich bewegenden Metallbands unter Erhalt eines Pulverbetts,

d) Erhitzen von zumindest einem Teil des Pulverbetts mit Laser- oder Elektronenstrahlung auf wenigstens die Sinter- oder Schmelztemperatur des Pulvers unter Erzeugung einer Materialschicht.

Das erfindungsgemäße Verfahren erlaubt es, nahezu jede beliebige Schichtgeometrie direkt auf ein Metallband aufzutragen.

Ein weiterer Vorteil des erfindungsgemäßen Verfahrens besteht darin, dass auf demselben Metallband auf einfache Weise unterschiedliche Schichtgeometrien hinter- bzw. nebeneinander auf getragen werden können.

Ein weiterer Vorteil des erfindungsgemäßen Verfahrens kann darin liegen, dass Metallbänder mit Materialschichten versehen werden können, die durch galvanische Abscheidung nicht zugänglich sind.

Die Erfindung wird nachstehend anhand der Beschreibung erläutert und beispielhaft anhand von Figuren dargestellt:

Figur 1: Vorrichtung zum kontinuierlichen Beschichten von Metallbändern.

Figur 2: Prozessschema einer Ausführungsform der vorliegenden Erfindung, bei der mehrere Materialschichten nacheinander auf einem Metallband aufgetragen werden.

Figur 3: Prozessschema einer Ausführungsform der vorliegenden Erfindung, bei der mehrere Materialschichten aus unterschiedlichen Pulvern nacheinander auf einem Metallband aufgetragen werden.

Figur 4: Verfahrensablauf, bei dem zwei Materialschichten nacheinander aus verschiedenen Pulvern erzeugt werden.

Figur 5: Verfahrensvariante, bei der die Dicke des Pulverbetts im Verfahren variiert wird und dieses Pulverbett anschließendes erhitzt wird.

Figur 6: Verfahrensvariante, bei der Pulver aus einem Pulvertrichter auf ein Metallband rieselt.

Figur 7: Verfahrensvariante, bei der ein Metallband aus einem Pulvertrichter austretendes Pulver mitschleppt.

Das erfindungsgemäße Verfahren umfasst unter Schritt a) das Bereitstellen eines Metallbands. Das Material des Metallbands kann ausgewählt sein aus beliebigen Metallen oder Metalllegierungen. In einer bevorzugten Ausführungsform ist das Metall des Metallbandes ausgewählt aus der Gruppe bestehend aus Kupfer, Kupferlegierungen, Zink, Stahl und Edelstahl. Die Kupferlegierung kann beispielsweise Messing sein. Das bereitgestellte Metallband kann entweder unbeschichtet sein oder eine Materialschicht aufweisen.

Das erfindungsgemäße Verfahren umfasst unter Schritt b) das Bereitstellen eines schmelz- und/oder sinterbaren Pulvers. Als sinterbare und/oder schmelzbare Materialien sind im Rahmen der Erfindung solche zu verstehen, die sich bei den vorherrschenden Bedingungen in einem additiven Fertigungsverfahren nicht thermisch zersetzen. Pulver bestehen aus einzelnen Partikeln. Die Pulver weisen eine Partikelgrößenverteilung auf. Typische Pulver weisen einen mittleren Teilchendurchmesser $d_{50}$ im Bereich von 1 - 200 $\mu$m auf, insbesondere einen mittleren Teilchendurchmesser $d_{50}$ im Bereich von 10 - 150 $\mu$m. Zur Bestimmung des $d_{50}$-Werts kann das jeweilige Pulver als Trockendispersion mittels Laserbeugungs-Partikelgrößenanalyse gemäß der ISO 13320:2009 vermessen werden.

Die Partikel des Pulvers bestehen vorzugsweise aus einem bei Raumtemperatur und Atmosphärendruck festen Material. Das Material weist in einer bevorzugten Ausführungsform eine Schmelztemperatur unterhalb der Zersetzungstemperatur auf. Optional kann das Material eine Glasübergangstemperatur aufweisen. Die Schmelztemperatur bzw. falls vorhanden die Glasübergangstemperatur des Materials liegt bevorzugt oberhalb von 100°C, insbesondere oberhalb von 300°C. Die Glasübergangstemperatur kann beispielsweise mittels der dynamischmechanischen Analyse oder dynamischen Differenzkalorimetrie (DSC) bestimmt werden.

Das Pulver kann eine Vielzahl von Materialien enthalten. Das Pulver kann mindestens ein Material enthalten, das ausgewählt ist aus der Gruppe bestehend aus Metallen, Keramiken, Gläsern und Glaskeramiken. In einer bevorzugten Ausführungsform besteht das Pulver aus einem der vorgenannten Materialien. In einer bevorzugten Ausführungsform kann das Pulver auch eine Mischung von Pulvern aus unterschiedlichen Materialien aufweisen. Insbesondere können Mischungen verschiedener Metallpulver, Mischungen verschiedener Keramikpulver oder Mischungen aus Metall- und Keramik-Pulvern verwendet werden.

Unter "Metalle" sind vorliegend sowohl reine Metalle als auch Metalllegierungen zu verstehen. In dem erfindungsgemäßen Pulver kann als Metall ein reines Metall, mehrere Arten von reinen Metallen, eine Art von Metalllegierung, mehrere Arten von Metalllegierungen oder Mischungen davon enthalten sein. Im Rahmen der Erfindung bezieht sich der Begriff "Metall" auf ein chemisches Element, das im Periodensystem der Elemente in derselben Periode wie Bor, aber links von Bor, in derselben Periode wie Silizium, aber links von Silizium, in derselben Periode wie Germanium, aber links von Germanium, und in derselben Periode wie Antimon, aber links von Antimon steht, sowie auf alle Elemente, die eine höhere Ordnungszahl als 55 aufweisen.

Der Begriff "reine Metalle" bedeutet, dass das Metall elementar vorliegt. Das elementar vorliegende Metall kann Verunreinigungen aufweisen. Bevorzugt beträgt die Gesamtmenge an Verunreinigungen nicht mehr als 1 Gewichtsprozent, insbesondere nicht mehr als 0,1 Gewichtsprozent und ganz besonders bevorzugt nicht mehr als 0,01 Gewichtsprozent, bezogen auf die Gesamtmenge an reinem Metall.

In einer bevorzugten Ausführungsform kann das reine Metall ein Edelmetall sein. In einer besonders bevorzugten Ausführungsform ist das Edelmetall ein Platinmetall, Gold oder Silber. Das Platinmetall können ausgewählt werden aus der Gruppe bestehend aus Platin, Iridium, Palladium, Ruthenium, Rhodium und Osmium.

In einer anderen bevorzugten Ausführungsform kann das reine Metall ein Refraktärmetall sein. Das Refraktärmetall kann ausgewählt sein aus Elementen der 4. Nebengruppe (z.B. Titan, Zirconium und Hafnium), der 5. Nebengruppe (z.B. Vanadium, Niob und Tantal) sowie der 6. Nebengruppe (z.B. Chrom, Molybdän und Wolfram).

In einer weiteren bevorzugten Ausführungsform kann das reine Metall ein Buntmetall oder Eisen sein. Das Buntmetall kann ausgewählt sein aus der Gruppe bestehend aus Cadmium, Cobalt, Kupfer, Nickel, Blei, Zinn und Zink.

Das Metall kann ein einer Ausführungsform eine Metalllegierung sein. Als Metalllegierungen werden erfindungsgemäß metallische Gemische aus wenigstens zwei Elementen verstanden, von denen wenigstens eins ein Metall ist. "Metallisch" meint in diesem Zusammenhang, dass eine metallische Bindung vorliegt.

In einer bevorzugten Ausführungsform kann die Metalllegierung eine Edelmetalllegierung sein. In einer besonders bevorzugten Ausführungsform enthält die Edelmetalllegierung ein Element ausgewählt aus der Gruppe bestehend aus Platinmetallen, Gold und Silber.

Bevorzugte Platinmetalle in den Edelmetalllegierungen können ausgewählt sein aus der Gruppe bestehend aus Platin, Iridium, Palladium, Ruthenium, Rhodium und Osmium. In einer weiteren bevorzugten Ausführungsform die Edelmetalllegierung eine Legierung aus mindestens zwei dieser Platinmetalle sein (z.B. Platin-Iridium- oder Platin-Rhodium-Legierungen).

Die Metalllegierung können bevorzugt Elemente enthalten die aus gewählt sind aus Refraktärmetallen, Buntmetallen, Eisen sowie Kombinationen aus mindestens zwei dieser Metalle.

Besonders bevorzugte Metalllegierungen können außerdem ausgewählt sein aus Aluminiumlegierungen, Edelstahllegierungen, Werkzeugstahllegierungen, Nickelbasislegierungen, Cobaltbasislegierungen, Titan-Aluminium-Legierungen, Kupfer-ZinnLegierungen und Superlegierungen für Hochtemperaturanwendungen. Wenn in der Bezeichnung ein Element genannt ist, wie z.B. in "Aluminiumlegierung", bedeutet dies, dass das genannte Element - in diesem Beispiel Aluminium - den Hauptbestandteil ausmacht. "Hauptbestandteil" meint das Elemente, das bezogen auf das Gewicht der Legierung am häufigsten vorkommt.

In einer besonders bevorzugten Ausführungsform kann die Metalllegierung ein amorphes Metall sein. Unter amorphen Metallen sind Legierungen zu verstehen, die metallischen Bindungscharakter und gleichzeitig eine amorphe, also nicht-kristalline, Phase aufweisen. Amorphe Metalle können besondere Eigenschaften aufweisen, da sie auf der einen Seite häufig sehr hart sind, aber auf der anderen Seite plastisch formbar (duktil) und hoch elastisch sein können. Die amorphen Metalle können ausgewählt sein aus der Gruppe bestehend aus Titan-, Zirkon-, Eisen-, Nickel-, Cobalt-, Palladium-, Platin-, Kupfer-, Gold-, Magnesium-, Calcium- und Aluminium-basierten Legierungen. "Basiert" meint in diesem Zusammenhang, dass das jeweils genannte Element auf das Gewicht der Legierung bezogen den größten Anteil darstellt. Besonders bevorzugte Beispiele für Legierungen, die amorphe Metalle bilden, sind ausgewählt aus der Gruppe bestehend aus NiNbSn, CoFeTaB, CaMgAgCu, CoFeBSiNb, FeGa(Cr,Mo)(P,C,B), TiNiCuSn, FeCoLnB, Co(Al,Ga)(P,B,Si), FeBSiNb, Ni(Nb,Ta)ZrTi. Insbesondere kann das amorphe Metall eine ZrCuAlNb-Legierung sein, wie z.B. die kommerziell erhältliche Legierung AMZ4® von der Firma Heraeus Deutschland GmbH.

Geeignete Verfahren für die Herstellung von Metallpulvern sind dem Fachmann prinzipiell bekannt. Bevorzugt erfolgt die Herstellung des Pulvers aus Metallpartikeln durch ein Verdüsungsverfahren, insbesondere durch eine, eine Plasmaverdüsung, eine Zentrifugalverdüsung oder eine tiegellose Verdüsung.

Das Material des erfindungsgemäßen Pulvers kann in einer Ausführungsform eine Keramik sein. Unter Keramiken sind im Kontext der Erfindung kristalline anorganische Materialien zu verstehen, die keinen metallischen Charakter aufweisen. In einer bevorzugten Ausführungsform kann die Keramik natürliche Mineralien umfassen. Die Keramik kann ausgewählt sein aus der Gruppe bestehend aus Oxidkeramiken, Nitridkeramiken, Carbidkeramiken sowie Mischformen von mindestens zwei dieser Keramiken.

Die Oxidkeramiken können bevorzugt Oxide der Elemente aufweisen, die ausgewählt sind aus der Gruppe bestehend aus Magnesium, Calcium, Aluminium, Silizium, Titan, Zirkonium und Zink. Die Oxidkeramik kann reine Elementoxide oder Mischoxide umfassen. In einer bevorzugten Ausführungsform sind die Elementoxide ausgewählt aus der Gruppe bestehend aus Magnesiumoxid, Calciumoxid, Aluminiumoxid, Siliziumoxid, Titanoxid, Zirkonmoxid und Zinkoxid. In einer Ausführungsform enthalten die Mischoxide mindestens zwei der genannten Elemente, die ausgewählt sind aus der Gruppe bestehend aus Magnesium, Calcium, Aluminium, Silizium, Titan, Zirkon und Zink. Optional können die Mischoxide weitere Elemente enthalten, die ausgewählt sind aus der Gruppe bestehend aus den Elementen der Gruppen 13. bis 16. des Periodensystems der Elemente.

Keramikpulver können nach dem Fachmann bekannten Verfahren hergestellt werden, z.B. durch Mahlen.

Das Material des erfindungsgemäßen Pulvers kann in einer Ausführungsform ein Glas sein. Unter einem Glas ist im Rahmen der Erfindung ein anorganisches amorphes Material zu verstehen, das keinen metallischen Bindungscharakter aufweist. Die Gläser können bevorzugt oxidische Gläser sein. Oxidische Gläser können bevorzugt ausgewählt sein aus der Gruppe bestehend aus Silikatgläsern, Boratgläser und Phosphatgläsern. Die Bezeichnung dieser bevorzugten oxidischen Gläser gibt jeweils an, welche Komponente, auf das Gewicht bezogen, am häufigsten vorkommt. Zum Beispiel ist Silikat ($SiO_4^{4-}$) die häufigste Komponente in Silikatgläsern. Jede der genannten Arten von Gläsern kann weitere Elemente als Oxide enthalten, wobei diese weiteren Elemente beispielsweise ausgewählt sein können aus Alkalimetallen, Erdalkalimetallen, Aluminium, Blei, Zink und Titan.

Die Glaspulver können nach dem Fachmann bekannten Verfahren, beispielsweise durch Mahlen oder chemische Synthesen (z.B. Fällung, Sol-Gel-Verfahren) hergestellt werden.

In einer Ausführungsform kann das Pulver eine Glaskeramik enthalten. Glaskeramiken sind anorganische Materialien, die keinen metallischen Charakter aufweisen und sowohl amorphe als auch kristalline Phasen aufweisen.

Bevorzugt genügen mindestens 80% der Partikel der folgenden Bedingung:

$$0,8 \leq d_{min}/d_{max} \leq 1,0;$$

wobei $d_{min}$ der minimale Durchmesser und $d_{max}$ der maximale Durchmesser eines Partikels sind.

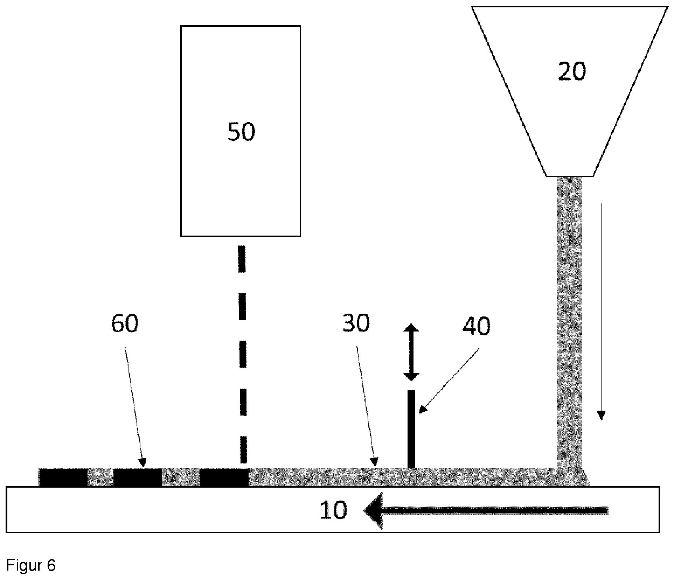

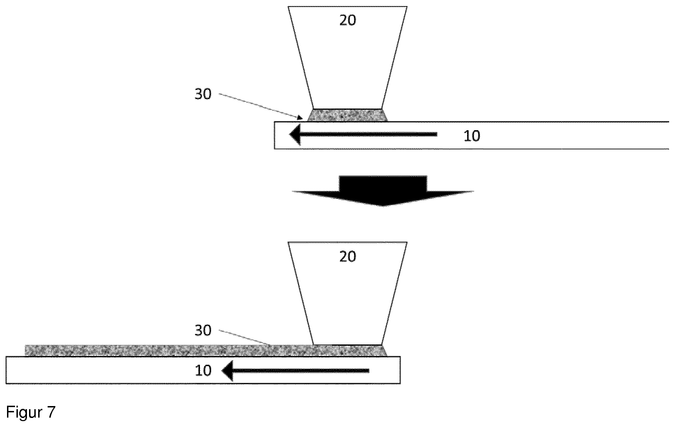

In Schritt c) des Verfahrens wird eine Schicht des Pulvers aus Schritt b) auf einem sich bewegenden Metallbandabschnitt aufgetragen und so ein Pulverbett erzeugt. Das Auftragen der Schicht des Pulvers kann auf verschiedene Weisen erfolgen. Beispielsweise kann ein Pulvertrichter über dem Metallband angeordnet werden, wobei das Pulver aus dem Trichter (20) auf das Metallband rieselt (Figur 6). Alternativ kann es auch bevorzugt sein, wenn ein Pulvertrichter so nah über dem Metallband angeordnet ist, dass weiteres Pulver nur aus dem Trichter austreten kann, wenn das Pulver am Austritt des Trichters (20) von dem sich bewegenden Metallband (10) mitgeschleppt wird (dargestellt in Figur 7).

Das Auftragen der Schicht des Pulvers kann kontinuierlich oder semi-kontinuierlich erfolgen. Kontinuierlich meint im Kontext der Erfindung, dass ohne zeitliche Unterbrechung eine zusammenhängende Schicht des Pulvers auf das Metallband aufgetragen werden kann, insbesondere während sich das Metallband bewegt. Semi-kontinuierlich meint im Kontext der Erfindung, dass das Auftragen des Pulvers zu einem bestimmten Zeitpunkt ohne räumliche Unterbrechung der Schicht angehalten wird und zu einem späteren Zeitpunkt fortgesetzt wird (stop-and-go). In diesem Fall (stop-and-go) kann also ein zusammenhängendes Pulverbett erzeugt werden. In einer alternativen Ausführungsform kann die Schicht des Pulvers auch mit räumlichen Unterbrechungen auf dem Metallband aufgetragen werden, wodurch Bereiche des Metallbands frei von einem Pulverbett bleiben können.

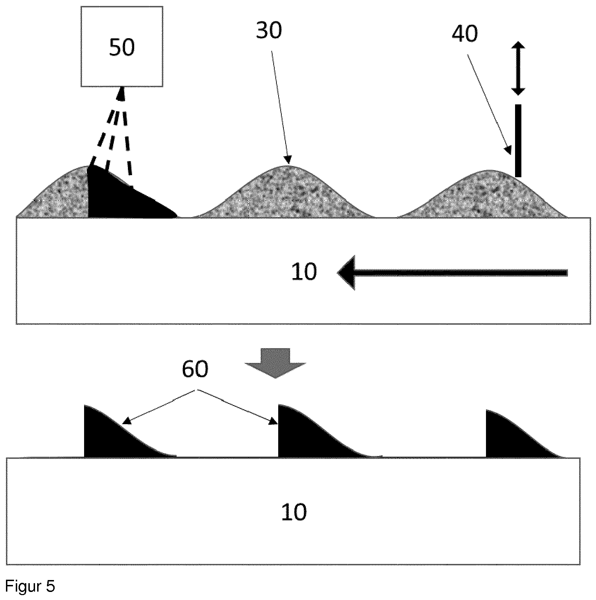

Die aufgetragene Pulverschicht wird auch als Pulverbett bezeichnet. Die Dicke des Pulverbetts kann während des gesamten Verfahrens konstant gehalten werden oder sich im Verlauf des Verfahrens ändern. Für den Fall, dass die Schichtdicke nicht konstant ist, kann die Schichtdicke beispielsweise einen Dickegradienten senkrecht zur Bewegungsrichtung des Metallbandes aufweisen. In einer weiteren bevorzugten Ausführungsform kann sich die Schichtdicke auch entlang der Bewegungsrichtung ändern (dargestellt in Figur 5). In einer besonders bevorzugten Ausführungsform kann die Schichtdicke sowohl entlang als auch senkrecht zur Metallbandrichtung variiert werden.

Die Einstellung der Schichtdicke des Pulverbetts kann direkt während des Auftragens oder in einem nachgelagerten Schritt erfolgen. Beispielsweise kann die Dicke des Pulverbetts nachträglich mit einer Rakel eingestellt werden. In einer Ausführungsform kann eine Vorrichtung zum Einstellen der Schichtdicke in einen Pulvertrichter integriert sein.

In einer anderen bevorzugten Ausführungsform kann das Pulverbett auch durch Sprühen des Pulvers erzeugt werden. Das Besprühen des Metallbands kann mit aus der Pulverbeschichtung bekannten Verfahren durchgeführt werden.

Im Schritt d) erfolgt ein zumindest teilweises Erhitzen des Pulverbetts mit Hilfe von Laser- oder Elektronenstrahlung auf wenigstens die Sinter- oder Schmelztemperatur des Pulvers unter Erzeugung einer Materialschicht. In den erhitzten Bereichen des Pulverbetts kann es zu einer Verbindung der Pulverpartikel untereinander kommen unter Ausbildung einer zusammenhängenden Materialschicht. Außerdem kann es im erhitzten Bereich zu einer Verbindung der Materialschicht mit dem darunter liegenden Material kommen. Das darunter liegende Material kann zum Beispiel das unbeschichtete Metallband und/oder eine zuvor bereits auf dem Metallband aufgetragene Materialschicht sein.

Die Strahlung ist bevorzugt Laserstrahlung oder Elektronenstrahlung. Die Laserstrahlung weist bevorzugt eine Wellenlänge im infraroten Bereich des Lichts auf (d.h. mit einer Wellenlänge im Bereich von 780 nm - 1 mm). Typische Laserwellenlänge sind 946 nm, 1064 nm, 1523 nm, 3,391 $\mu$m und 10,6 $\mu$m)

Das Erhitzen des Pulvers erfolgt wenigstens auf die Sinter- oder Schmelztemperatur. Bei Erreichen der jeweiligen Temperatur können sich die einzeln vorliegenden Partikel miteinander verbinden und so eine zusammenhängende Materialschicht bilden. Beim Sintern erfolgt die Verbindung einzelner Partikel bevorzugt durch Diffusion von Atomen (z.B. Oberflächenatomen) in den Kontaktbereich zweier Partikel. Typischerweise bleibt die Morphologie der einzelnen Partikel beim Sintern zumindest teilweise erhalten. Folglich können durch das Sintern von Pulvern bevorzugt poröse Materialschichten erhalten werden.

Wenn das Pulver auf die Schmelztemperatur oder darüber erhitzt wird, wird das Material der Pulverpartikel zumindest teilweise flüssig. Für den Fall, dass die verwendeten Materialien über ihre Schmelztemperatur erhitzt werden, kann die Struktur der Partikel teilweise oder vollständig verloren gehen.

In einer bevorzugten Ausführungsform wird durch die Strahlung nicht nur das Pulver sondern auch das darunter befindliche Material auf wenigstens die Sinter- und/oder Schmelztemperatur erhitzt. Auf diese Weise ist es möglich, dass die erhitzte Pulverschicht mit dem darunter liegenden Material verschmilzt oder versintert. Das darunter liegende Material kann beispielsweise das Metallband oder eine bereits auf dem Metallband vorliegende Materialschicht sein.

Je nach verwendeter Materialkombination von Pulver und Metallband kann es im Kontaktbereich der beiden Materialien zu einer Legierungsbildung kommen.

Das Erhitzen des Pulverbetts kann selektiv oder über die ganze Breite des Metallbands erfolgen. In einer bevorzugten Ausführungsform kann das Pulverbett selektiv an vordefinierten Bereichen erhitzt werden. Die erhitzten Bereiche des Pulverbetts können beliebige Geometrien aufweisen. Mit dem erfindungsgemäßen Verfahren sind sowohl vereinzelte als auch zusammenhängende Materialschichten erhältlich. Die Geometrien der erhitzten Bereiche können sowohl entlang des Metallbands als auch senkrecht dazu in ihrer Ausdehnung variieren.

In einer bevorzugten Ausführungsform bewegt sich das Metallband während Schritt d) nicht. Dadurch ist es möglich, besonders präzise Geometrien der fertigen Materialschicht zu erhalten.

In einer bevorzugten Ausführungsform kann das zu beschichtende Metallband zusätzlich vor dem Erhitzen des Pulverbetts über Raumtemperatur erhitzt werden, insbesondere auf eine Temperatur von 150°C oder mehr. Dadurch kann sowohl die Ausbildung der Materialschicht als auch die Anbindung der Materialschicht an das zu beschichtende Metallband verbessert werden. Bevorzugt erfolgt das Erhitzen des Metallbands durch die Metallbandführung. Alternativ kann das Erhitzen des Metallbands auch auf anderem Weg, z.B. mittels Wärmebestrahlung erfolgen.

Die Steuerung des Strahls erfolgt bevorzugt mit einem Computer. Typischerweise steuert ein Computer eine bewegliche Optik, die die Strahlung auf die zu erhitzenden Bereiche lenkt.

In den erhitzten Bereichen kann es zu einer Verbindung der Pulverpartikel untereinander kommen, unter Ausbildung einer zusammenhängenden Materialschicht. Außerdem kann es im erhitzten Bereich zu einer Verbindung der Materialschicht mit dem Metallband kommen. Nach dem Erhitzen kann das Material abkühlen und dabei erstarren.

Anschließend kann in einer bevorzugten Ausführungsform loses Pulver von dem Metallband entfernt werden. Bevorzugt wird loses Pulver durch Absaugen, Abspülen oder Abblasen entfernt. Das überschüssige, entfernte Pulver wird vorzugsweise wiederverwendet. Dadurch kann Abfall vermieden werden und eine materialeffiziente Verfahrensdurchführung ermöglicht werden.

In einer bevorzugten Ausführungsform des Verfahrens werden die Schritte a) - d) mehrmals nacheinander durchgeführt werden, wobei das Metallband in beiden Durchläufen dasselbe ist.

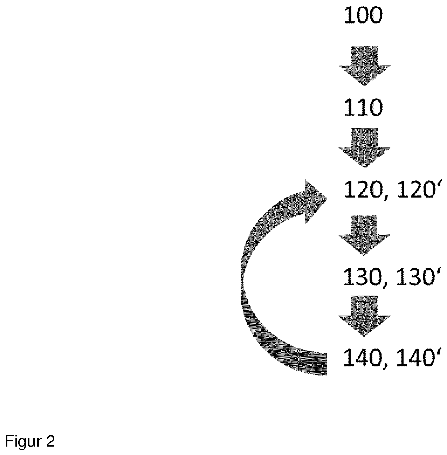

Einige mögliche Ausgestaltungen des erfindungsgemäßen Verfahrens werden im Folgenden anhand der Figuren 2 bis 4 erläutert.

In einer bevorzugten Ausführungsform werden mehrere Materialschichten nacheinander auf dem Metallband aufgetragen, wobei die Materialien der zuerst aufgetragenen Materialschicht und der weiteren Materialschicht gleich sind. Das Verfahren wird anhand von Figur 2 erläutert. Zuerst werden die Schritte a) - d) des erfindungsgemäßen Verfahrens mit einem Pulver A durchgeführt (korrespondierend zu 100, 110, 120 und 130 in Figur 2, d.h. 100 Bereitstellen eines Metallbands, 110 Bereitstellen von Pulver A, 120 Erzeugung eines Pulverbetts von A, 130 Erhitzen d. Pulverbetts von A). Anschließend wird nicht erhitztes Pulver A entfernt (140). In einer Ausführungsform kann auf die bereits vorhandene Materialschicht ein weiteres Pulverbett des Pulvers A aufgetragen (120') und erhitzt werden (130'). Dadurch lässt sich eine weitere Materialschicht auf der vorherigen Materialschicht erzeugen. Optional kann anschließend an den wiederholten Schritt (130') das lose Pulver A des Pulverbetts entfernt werden (140'). Die weitere Materialschicht kann dieselbe Geometrie aufweisen wie die erste Materialschicht oder ein andere Geometrie. Zum Beispiel können die Geometrien der vorherigen und der weiteren Materialschicht überlappen.

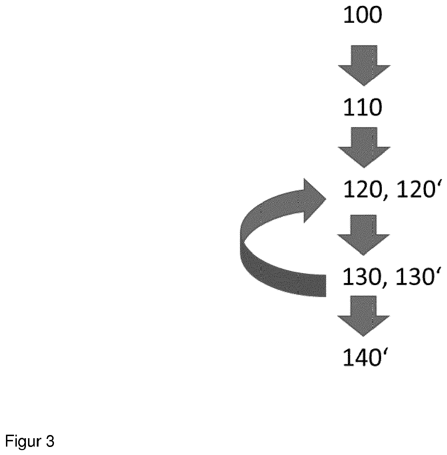

In einer weiteren bevorzugten Ausführungsform werden mehrere Materialschichten nacheinander aufgetragen, wobei die Materialien der zuerst aufgetragenen Materialschicht und der weiteren Materialschicht gleich sind. Dieses Verfahren wird anhand von Figur 3 erläutert. Zuerst können die Schritte a) - d) des erfindungsgemäßen Verfahrens mit einem Pulver A durchgeführt werden (korrespondierend zu den Schritten (100), (110), (120) und (130) in Fig. 3). Im Unterschied zum Verfahren im vorherigen Absatz (Figur 3) wird das Pulver nach Schritt (130) nicht entfernt. Anschließend kann auf die bereits vorhandene Materialschicht ein weiteres Pulverbett des Pulvers A aufgetragen (120') und erhitzt werden (130'), wobei zwischen dem ersten Durchlauf der Schritte (120) und (130) und dem weiteren Durchlauf der Schritte (120') und (130') das nicht erhitzte Pulver des Pulverbetts nicht entfernt wird. Auf die beschriebene Weise kann eine weitere Materialschicht auf der vorherigen Materialschicht erzeugt werden. Optional kann anschließend an den weiteren Durchlauf der Schritte (120') und (130') das nicht erhitzte Pulver A von dem Metallband entfernt werden (140). Die weitere Materialschicht kann dieselbe Geometrie aufweisen wie die erste Materialschicht oder ein andere. Zum Beispiel können die Geometrien der vorherigen und der weiteren Materialschicht überlappen.

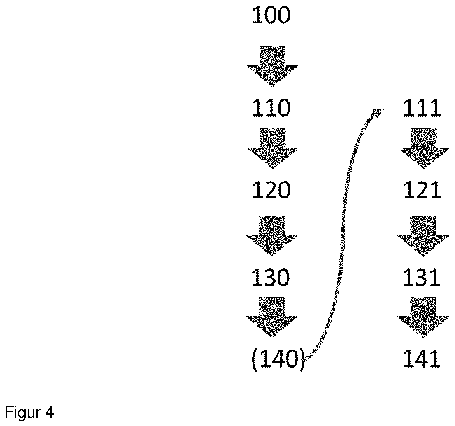

In einer weiteren bevorzugten Ausführungsform werden mehrere Materialschichten nacheinander aufgetragen, wobei sich die Pulver der zuerst aufgetragenen Materialschicht und der weiteren Materialschicht unterscheiden. Diese Ausführungsform des Verfahrens wird anhand von Figur 4 erläutert. Zuerst können die Schritte a - d des erfindungsgemäßen Verfahrens mit einem Pulver A durchgeführt werden (korrespondierend zu 100, 110, 120 und 130 in Fig. 4). Optional kann anschließend an Schritt (130) das nicht erhitzte Pulver des Pulverbetts A entfernt werden (140). Anschließend kann ein weiteres Pulver B bereitgestellt werden (111) und auf die bereits vorhandene Materialschicht ein weiteres Pulverbett des Pulvers B aufgetragen (121) werden. Das weitere Pulverbett des Pulvers B kann daraufhin erhitzt werden (131). Auf die beschriebene Weise lässt sich eine weitere Materialschicht auf der vorherigen Materialschicht erzeugen. Optional kann anschließend an Schritt (131) das nicht erhitzte Pulver des Pulverbetts B entfernt werden (141). Die weitere Materialschicht, die in Schritt (131) erzeugt wurde, kann dieselbe Geometrie aufweisen wie die erste Materialschicht, die in Schritt 130 erzeugt wurde, oder ein von der vorher erzeugten Geometrie verschiedene. Zum Beispiel können die Geometrien der vorherigen und der weiteren Materialschicht überlappen.

Das zuerst aufgetragene Pulver und das weitere aufgetragene Pulver können unterschiedliche Materialien enthalten. Beispielsweise kann ein Pulver ein Metall enthalten und das jeweils andere eine Keramik. So kann beispielsweise ein Schichtaufbau aus einer dielektrischen Materialschicht und einer weiteren, elektrisch leitenden Materialschicht auf dem Metallband erzeugt werden. Dabei kann es vorteilhaft sein, dass die leitende Materialschicht nicht im elektrischen Kontakt mit dem Metallband steht, sondern durch eine isolierende Materialschicht (z.B. aus Keramik) von dem Metallband getrennt ist.

Weiterhin betrifft die vorliegende Erfindung eine Anlage zum Aufbringen einer Materialschicht auf ein Metallband enthaltend:

- eine Fördereinrichtung, die ausgestaltet ist, um ein Metallband kontinuierlich an einer Pulverzufuhr und einer Strahlungsquelle vorbeizuführen,

- mindestens eine Pulverzufuhr zur kontinuierlichen Erzeugung eines Pulverbetts auf dem Metallband und

- mindestens eine Strahlungsquelle, deren Strahlung das Pulver des Pulverbetts auf wenigstens die Schmelzen und/oder Sintertemperatur erhitzen kann.

In einer bevorzugten Ausführung ist die Fördereinrichtung eine Rolle, von der ein Metallband abgerollt werden kann. Bevorzugt wird das Metallband so geführt, dass es während des Verfahrens waagerecht gehalten wird.

In einer bevorzugten Ausführung enthält die erfindungsgemäße Anlage eine Bandführung. Diese Bandführung kann dazu dienen das Metallband möglichst präzise durch die Anlage zu führen, um die Genauigkeit der Auftragung der Materialschicht zu erhöhen. In einer bevorzugten Ausführung weist die Bandführung auf beiden Seiten des Metallbands eine Begrenzung für das auf dem Metallband befindliche Pulverbett auf. In einer alternativen Ausführungsform stützt die Bandführung das Metallband auch von unten. In einer bevorzugten Ausführungsform enthält die Bandführung eine Vorrichtung zum Erhitzen des Metallbands. Die Vorrichtung zum Erhitzen des Metallbands ist bevorzugt so angeordnet, dass das Metallband zumindest teilweise erhitzt werden kann, bevor das Pulverbett durch Strahlung erhitzt wird.

Die mindestens eine Pulverzufuhr kann auf verschiedene Arten ausgebildet sein. In einer Ausführung kann die Pulverzufuhr ein Pulvertrichter sein. Der Pulvertrichter kann auf unterschiedliche Arten angeordnet sein. Der Pulvertrichter kann so weit über dem Metallband angeordnet sein, dass Pulver frei fallend auf das Metallband rieselt. Alternativ ist es auch möglich, dass der Pulvertrichter so nah über dem Metallband angeordnet ist, dass nur eine begrenzte Menge Pulver aus dem Trichter (20) austreten kann. In diesem bevorzugten Szenario kann weiteres Pulver erst aus dem Pulvertrichter austreten, wenn sich das Metallband (10) bewegt und bereits ausgetretenes Pulver (30) mitnimmt (Figur 7). In einer weiteren bevorzugten Ausführungsform kann das Pulver auf das Metallband gesprüht werden. Zum Sprühen des Pulvers können bevorzugt Mittel eingesetzt werden, wie sie beim industriellen Pulverbeschichten verwendet werden.

Weiterhin kann die erfindungsgemäße Anlage bevorzugt eine Vorrichtung zum Einstellen der Schichtdicke enthalten. In einer bevorzugten Variante kann diese Vorrichtung ein Abstreifer sein. Der Abstreifer kann eine Kante aufweisen, die in einer definierten Höhe über das Pulverbett streift, wenn sich das Metallband bewegt. Dadurch kann überschüssiges Pulver vom Pulverbett entfernt werden. Die Kante kann gerade oder profiliert sein, also eine bestimmte Struktur mit Erhöhungen und Vertiefungen aufweisen. In einer besonders bevorzugten Ausführungsform ist die Vorrichtung zum Einstellen der Schichtdicke in einen Pulvertrichter integriert.

Bevorzugt ist die Position des Abstreifers verstellbar. Dadurch kann die Schichtdicke des Pulverbetts eingestellt werden. In einer bevorzugten Ausführungsform kann die Position (z.B. Neigung oder Höhe) des Abstreifers während der Durchführung des Verfahrens verstellbar sein. Die Einstellung der Position kann manuell oder automatisch erfolgen. Besonders bevorzugt kann die Positionseinstellung mit einem Computer gesteuert werden. Figur 5 zeigt eine Ausführungsform, bei der die Schichtdicke des Pulverbetts während der Durchführung des Verfahrens mit Hilfe eines Abstreifers (40) periodisch geändert wird. Figur 5 zeigt weiter, wie das Pulverbett selektiv mit einer Strahlungsquelle (50) erhitzt wird, wodurch einzelne Materialschichten (60) mit einem Schichtdickegradienten erhalten werden.

Des Weiteren umfasst die erfindungsgemäße Anlage mindestens eine Strahlungsquelle, deren Strahlung das Pulver des Pulverbetts mindestens auf die Schmelz- und/oder Sintertemperatur erhitzen kann. In einer bevorzugten Ausführungsform ist die Strahlungsquellen ein Laser oder eine Elektronenstrahlquelle. Der Laser kann bevorzugt ein gepulst arbeitender oder ein kontinuierlich arbeitender Laser sein. Der Laser kann beispielsweise ein Gas-Laser (z.B. $CO_2$-Laser) oder ein Festkörperlaser sein. Bevorzugt emittiert der Laser Licht im Infrarotbereich bei einer Wellenlänge im Bereich von 780 nm - 1 mm. In einer besonders bevorzugten Ausführungsform ist der Laser ein Faserlaser, insbesondere ein im infraroten Wellenlängenbereich arbeitender Faserlaser, wie z.B. ein gepulster Yb-Faserlaser. In einer bevorzugten Ausführung enthält der Laser eine steuerbare Präzisionsoptik (auch Scanner genannt) mit der der Laserstrahl auf die Bereiche des Pulverbetts gerichtet werden kann, der erhitzt werden soll.

In einer besonders bevorzugten Ausführungsform enthält die erfindungsgemäße Anlage zwei oder mehr Strahlungsquellen. Optional können die mehreren Strahlungsquellen das Pulverbett an mehreren Orten gleichzeitig erhitzen. Dadurch ist es unter anderem möglich die Prozessgeschwindigkeit zu erhöhen.

In einer bevorzugten Ausführungsform kann die erfindungsgemäße Anlage weiterhin eine Vorrichtung zum Entfernen von losem Pulver nach dem Bestrahlen des Pulverbetts umfassen. Diese Vorrichtung kann beispielsweise eine Absaugvorrichtung oder ein Gebläse sein.

In einer besonders bevorzugten Ausführungsform kann die erfindungsgemäße Anlage auch mehrere Beschichtungseinheiten aufweisen, wobei eine Beschichtungseinheit jeweils eine Pulverzufuhr und mindestens einer Strahlquelle enthält. Mehrere solcher Einheiten können hintereinander, entlang der Bewegungsrichtung des Metallbands in der Anlage angeordnet sein. Durch diese Anordnung kann es möglich sein zuerst eine erste Materialschicht auf dem Metallband aufzutragen und anschließend eine zweite Materialschicht. Optional kann das nicht erhitzte Pulver des ersten Pulverbetts entfernt werden, bevor das weitere Pulverbett in der nächsten Beschichtungseinheit erzeugt wird. In einer bevorzugten Ausführung wird das beschichtete Metallband nach Schritt d) aufgerollt. Alternativ ist es auch möglich, dass das Metallband nach Schritt d) weiterverarbeitet wird, z.B. indem das Metallband zerschnitten wird.

Des Weiteren betrifft die vorliegende Erfindung ein Metallband aufweisend eine Materialschicht, erhältlich durch das erfindungsgemäße Verfahren.

Durch das erfindungsgemäße Verfahren ist es möglich Materialschichten auf Metallbänder aufzutragen, die nicht durch galvanische Verfahren aufgebracht werden können. Beispielsweise können Materialschichten aus definierten Legierungen auf einem Metallband aufgebracht werden. Des Weiteren können mit Hilfe der vorliegenden Erfindung beispielsweise auch Keramiken auf Metallbänder aufgedruckt werden, die auf dem Metallband elektrisch isolierende Eigenschaften aufweisen.

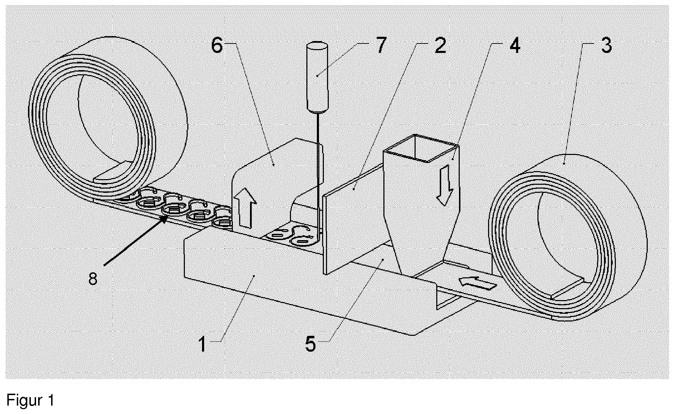

Im Folgenden soll die vorliegende Erfindung anhand eines konkreten Ausführungsbeispiels unter Bezugnahme auf Fig. 1 erläutert werden.

Ein aufgerolltes Metallband (3) wird von einer Rolle abgerollt und in eine Bandführung (1) eingeführt. Über eine entlang der Bandführung positionierte Pulverzufuhr (4) wird auf dem Metallband (3) ein Pulverbett (5) erzeugt. Mit Hilfe eines Abstreifers (2) wird die Schichtdicke des Pulverbetts eingestellt. Anschließend wird das Pulverbett (5) mit einer Strahlungsquelle (7) (vorzugsweise einem Laser) selektiv erhitzt. Dadurch wird eine mit der Oberfläche des Metallbands verbundene, strukturierte Materialschicht (8) erzeugt. Nach dem Abkühlen des erhitzten Bereichs wird loses Pulver (Restpulver) von dem Metallband abgesaugt (6). Das Metallband mit der darauf aufgetragenen strukturierten Materialschicht (8) wird anschließend auf eine weitere Rolle aufgerollt.

Liste der Bezugzeichen in den Figuren 5 - 7:

10: Metallband
20: Pulverzufuhr
30: Pulverbett
40: Abstreifer
50: Strahlungsquelle
60: Materialschicht

**Patentansprüche**

1. Verfahren zum Aufbringen einer Materialschicht auf ein Metallband enthaltend die Schritte:

   a) Bereitstellen eines Metallbands,
   b) Bereitstellen eines schmelz- und/oder sinterbaren Pulvers,
   c) Erzeugen einer Schicht des schmelz- und/oder sinterbaren Pulvers auf einem Abschnitt des sich bewegenden Metallbands unter Erhalt eines Pulverbetts,
   d) Erhitzen von zumindest einem Teil des Pulverbetts mit Laser- oder Elektronenstrahlung auf wenigstens die Sinter- oder Schmelztemperatur des Pulvers unter Erzeugung einer Materialschicht.

2. Verfahren nach Anspruch 1, **dadurch gekennzeichnet, dass** das Metallband ein Material aufweist, das ausgewählt ist aus der Gruppe bestehend aus Kupfer- und Kupferlegierungen, Zink, Stahl und Edelstahl.

3. Verfahren nach Anspruch 2, **dadurch gekennzeichnet, dass** die Kupferlegierung Messing ist.

4. Verfahren nach einem der Ansprüche 1 - 3, **dadurch gekennzeichnet, dass** das Material des Pulvers ausgewählt ist aus Metallen, Keramiken, Gläsern und Mischungen davon.

5. Verfahren nach einem der Ansprüche 1 - 4, wobei die Schritte a) - d) mehrmals nacheinander durchgeführt werden.

6. Verfahren gemäß Anspruch 5, wobei das Pulver von zwei aufeinander folgenden Durchläufen der Schritte a) - d) gleich oder verschieden sein kann.

7. Verfahren gemäß einem der Ansprüche 5 oder 6, wobei die Geometrie der Materialschicht von zwei aufeinander folgenden Durchläufen gleich oder verschieden sein kann

8. Verfahren nach einem der Ansprüche 1 - 7, wobei das Metallband nach Schritt d) aufgerollt wird.

9. Verfahren nach einem der Ansprüche 1 - 8, wobei das Verfahren kontinuierlich oder semi-kontinuierlich abläuft.

10. Anlage zum Aufbringen einer Materialschicht auf ein Metallband enthaltend:

   • eine Fördereinrichtung, die ausgestaltet ist, um ein Metallband kontinuierlich an einer Pulverzufuhr und einer Strahlungsquelle vorbeizuführen,
   • mindestens eine Pulverzufuhr zur kontinuierlichen Erzeugung eines Pulverbetts auf dem Metallband und
   • mindestens eine Strahlungsquelle, deren Strahlung das Pulver des Pulverbetts auf wenigstens die Schmelzen und/oder Sintertemperatur erhitzen kann.

11. Anlage gemäß Anspruch 9, aufweisend eine Vorrichtung zum Entfernen von losem, nicht erhitzten Pulver.

12. Anlage gemäß einem der Ansprüche 10 oder 11, wobei die Strahlungsquelle ein Laser oder eine Elektronenstrahlquelle ist.

13. Anlage gemäß einem der Ansprüchen 10 - 12, die weiterhin eine Bandführung aufweist.

14. Metallband aufweisend eine Materialschicht, erhältlich durch das Verfahren gemäß einem der Ansprüche 1 - 9.

Figur 1

100

110

120, 120'

130, 130'

140, 140'

Figur 2

100

110

120, 120'

130, 130'

140'

Figur 3

100

↓

110 → 111

↓ ↓

120 121

↓ ↓

130 131

↓ ↓

(140) 141

Figur 4

Figur 5

Figur 6

Figur 7

**Europäisches Patentamt**
**European Patent Office**
**Office européen des brevets**

# EUROPÄISCHER RECHERCHENBERICHT

**Nummer der Anmeldung**

EP 17 16 6877

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 758 404 A (MUTO TAKASHI [JP]) 19. Juli 1988 (1988-07-19) | 1-4,8-14 | INV. B22F3/105 |
| A | * Abbildungen 1-4 * <br> * Beispiele 1-4 * <br> ----- | 5-7 | B29C64/153 B23K26/00 B23K26/08 |
| X | US 2003/096136 A1 (FUJITA MASAHITO [JP] ET AL) 22. Mai 2003 (2003-05-22) | 1-4,8-14 | B23K26/34 C23C24/08 |
| A | * Absatz [0037] - Absatz [0045]; Abbildung 1 * <br> ----- | 5-7 | C23C24/10 |
| X | DE 101 06 474 A1 (FRAUNHOFER GES FORSCHUNG [DE]) 6. Dezember 2001 (2001-12-06) | 1-4,9-14 | |
| A | * Abbildungen 1-2 * <br> * Absatz [0026] - Absatz [0030] * <br> ----- | 5-8 | |
| X | US 2012/228807 A1 (TEULET PATRICK [FR]) 13. September 2012 (2012-09-13) | 1,5-14 | |
| A | * Absatz [0041] - Absatz [0065]; Abbildung 1 * <br> ----- | 2-4 | |
| A | US 4 832 982 A (MORI KAZUHIKO [JP] ET AL) 23. Mai 1989 (1989-05-23) * das ganze Dokument * <br> ----- | 1-14 | **RECHERCHIERTE SACHGEBIETE (IPC)** <br> B22F <br> B29C |
| A | US 2004/012124 A1 (LI XIAOCHUN [US] ET AL) 22. Januar 2004 (2004-01-22) * das ganze Dokument * <br> ----- | 1-14 | B23K <br> C23C |

Der vorliegende Recherchenbericht wurde für alle Patentansprüche erstellt

| Recherchenort | Abschlußdatum der Recherche | Prüfer |
|---|---|---|
| Den Haag | 25. Oktober 2017 | Morra, Valentina |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 16 6877

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-2017

| Im Recherchenbericht angeführtes Patentdokument | Datum der Veröffentlichung | Mitglied(er) der Patentfamilie | Datum der Veröffentlichung |
|---|---|---|---|
| US 4758404 A | 19-07-1988 | DE 3636641 A1<br>GB 2184380 A<br>JP H0342156 B2<br>JP S62118990 A<br>US 4758404 A | 21-05-1987<br>24-06-1987<br>26-06-1991<br>30-05-1987<br>19-07-1988 |
| US 2003096136 A1 | 22-05-2003 | GB 2383051 A<br>JP 2003136629 A<br>US 2003096136 A1 | 18-06-2003<br>14-05-2003<br>22-05-2003 |
| DE 10106474 A1 | 06-12-2001 | KEINE | |
| US 2012228807 A1 | 13-09-2012 | DK 2477769 T3<br>EP 2477769 A1<br>ES 2528949 T3<br>FR 2949988 A1<br>JP 5847084 B2<br>JP 2013505355 A<br>US 2012228807 A1<br>WO 2011033215 A1 | 19-01-2015<br>25-07-2012<br>13-02-2015<br>18-03-2011<br>20-01-2016<br>14-02-2013<br>13-09-2012<br>24-03-2011 |
| US 4832982 A | 23-05-1989 | JP H0698506 B2<br>JP S63144884 A<br>US 4832982 A | 07-12-1994<br>17-06-1988<br>23-05-1989 |
| US 2004012124 A1 | 22-01-2004 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010040261 A1
- US 20160129528 A1